# EUROPÄISCHE PATENTANMELDUNG

(11) **EP 0 839 697 A1**
(43) Veröffentlichungstag der Anmeldung: **06.05.1998**
(21) Anmeldenummer: 97118870.1
(22) Anmeldetag: 30.10.1997
(51) Int. Cl.: B60R 25/04

(54) **Vorrichtung zum zumindest vorübergehenden Setzen eines Veränderungssignals zum Verhindern des Startens eines Fahrzeuges**

(30) Priorität: 31.10.1996 DE 19644031
(71) Anmelder: Hille, Friedrich, 58239 Schwerte (DE)
(72) Erfinder: Hille, Friedrich, 58239 Schwerte (DE)
(74) Vertreter: Hilleringmann, Jochen, Dipl.-Ing.

(57) **Zusammenfassung**

Die Vorrichtung zum zumindest vorübergehenden Setzen eines Verhinderungssignals zum Verhindern des Startens eines eine Antriebsvorrichtung aufweisenden Fahrzeuges beim Verlassen eines vorgebbaren zulässigen geographischen Bereichs ist mit einem GPS-Empfänger zum Empfangen von GPS-Signalen zwecks Ermittlung des jeweils aktuellen Standorts des Fahrzeuges versehen. Ferner weist die Vorrichtung einen Speicher zum Speichern des zulässigen geographischen Bereichs und eine Auswerteeinheit zum Untersuchen, ob der aktuelle Standort des Fahrzeuges innerhalb oder außerhalb des vorgebbaren geographischen Bereichs liegt, auf. Mit der Auswerteeinheit verbunden ist eine Verhinderungssignal-Erzeugungsvorrichtung zum Setzen eines Verhinderungssignals zum Verhindern des Startens des Fahrzeuges nach Abschalten der das Fahrzeug antreibenden Antriebsvorrichtung, sofern der Standort des Fahrzeuges zum Zeitpunkt des Einschaltens der Antriebsvorrichtung außerhalb des geographischen Bereichs liegt. Das Verhinderungssignal wird erzeugt, sobald das Fahrzeug den zulässigen geographischen Bereich verläßt.

## Beschreibung

Die Erfindung betrifft eine Vorrichtung zum zumindest vorübergehenden Setzen eines Veränderungssignals zum Verhindern des Startens eines eine Antriebsvorrichtung (Motor) aufweisenden Fahrzeuges beim Verlassen eines vorgebbaren geographischen Bereichs.

In den letzten Jahren sind vermehrt Anstrengungen unternommen worden, um Kraftfahrzeuge vor Entwendung zu schützen. Neben Alarmanlagen, die bei unbefugtem Zugriff auf ein Fahrzeug einen akustischen Alarm auslösen und/oder ein Alarmsignal an eine Leitstelle aussenden, ist aus DE 42 24 536 A1 eine Anlage zur geographisch definierten Begrenzung des Bewegungsraumes eines Fahrzeuges bekannt. Diese Anlage ist mit einem GPS-Empfänger versehen, der über Satelliten empfangene Signale in Positionskoordinaten umsetzt, die dem jeweils aktuellen Standort des Fahrzeuges entsprechen. In einem Speicher ist ein geographischer Raum abgelegt, innerhalb dessen sich das mit der bekannten Anlage versehene Fahrzeug frei bewegen kann. Sobald festgestellt wird, daß der aktuelle Standort außerhalb des im Speicher gespeicherten geographischen Bereichs liegt, wird das Antriebssystem des Fahrzeuges blockiert, was beispielsweise durch Außerfunktionsetzen der Motorelektronik erfolgt. Da das Außerkraftsetzen bzw. Blockieren des Antriebssystems eines Fahrzeuges während der Fahrt aus verkehrssicherungstechnischen Gründen problematisch ist, ist bei der bekannten Anlage vorgesehen, den Fahrzeugführer über eine Vorwarnanzeige darüber zu informieren, daß das Fahrzeug bald den freien geographischen Bereich verläßt. Ignoriert der Fahrzeugführer diese Vorwarnung, so erfolgt in jedem Fall die Außerkraftsetzung des Antriebssystems bei fahrendem Fahrzeug, wenn dieses den freien geographischen Bereich verläßt.

Der Erfindung liegt die Aufgabe zugrunde, eine Vorrichtung zu schaffen, mittels derer es möglich ist, vorbereitende Maßnahmen innerhalb des Fahrzeuges zu treffen, so daß nach Vorliegen weiterer Randbedingungen das Fahrzeug stillgesetzt werden kann, sofern sich das Fahrzeug außerhalb eines vorgebbaren geographischen Bereichs befindet.

Zur Lösung dieser Aufgabe wird mit der Erfindung eine Vorrichtung zum zumindest vorübergehenden Setzen eines Verhinderungssignals zum Verhindern des Startens eines eine Antriebsvorrichtung aufweisenden Fahrzeuges beim Verlassen eines vorgebbaren geographischen Bereichs vorgeschlagen, wobei die Vorrichtung versehen ist mit
- einem GPS-Empfänger zum Empfangen von GPS-Signalen zwecks Ermittlung des jeweils aktuellen Standorts des Fahrzeuges,
- einem Speicher zum Speichern des zulässigen geographischen Bereichs,
- einer Auswerteeinheit zum Untersuchen, ob der aktuelle Standort des Fahrzeuges innerhalb oder außerhalb des vorgebbaren geographischen Bereichs liegt, und
- einer mit der Auswerteeinheit verbundenen Verhinderungssignal-Erzeugungsvorrichtung zum Setzen eines Verhinderungssignals zum Verhindern des Startens des Fahrzeuges nach Abschalten der das Fahrzeug antreibenden Antriebsvorrichtung, sofern der Standort des Fahrzeuges zum Zeitpunkt des Einschaltens der Antriebsvorrichtung außerhalb des geographischen Bereichs liegt,
- wobei das Verhinderungssignal erzeugt wird, sobald das Fahrzeug den zulässigen geographischen Bereich verläßt.

Ein mit der erfindungsgemäßen Vorrichtung ausgestattetes Fahrzeug läßt sich nur dann starten, wenn das Verhinderungssignal zum Zeitpunkt des Versuchs, das Fahrzeug zu starten, nicht gesetzt ist. Ist hingegen die Antriebsvorrichtung des Fahrzeuges eingeschaltet, d.h. wird das Fahrzeug von der Antriebsvorrichtung angetrieben oder steht das Fahrzeug bei eingeschalteter Antriebsvorrichtung (bei laufendem Motor), so wird in den Fahrbetrieb des Fahrzeuges nicht eingegriffen, wenn das Verhinderungssignal gesetzt wird. Erfindungsgemäß wird das Verhinderungssignal nur dann gesetzt, wenn bei Auswertung der vom GPS-Empfänger gelieferten Positionskoordinaten festgestellt wird, daß der aktuelle Standort des Fahrzeuges außerhalb des vorgebbaren geographischen Bereichs liegt. So lange die Antriebsvorrichtung des Fahrzeuges eingeschaltet bleibt, während sich das Fahrzeug außerhalb des abgespeicherten geographischen Bereichs befindet, ist der Bewegungsraum des Fahrzeuges in keiner Weise eingeschränkt. Insbesondere kann das Verhinderungssignal wieder rückgesetzt werden, wenn sich das Fahrzeug wieder im abgespeicherten geographischen Bereich befindet, wobei dies dadurch erfolgen kann, daß das Fahrzeug selbsttätig wieder in den zulässigen Bereich (zurück-) fährt oder in diesen (zurück-) transportiert wird (z. B. auf einem Transporter).

Alternativ bzw. zusätzlich kann vorgesehen sein, daß das Rücksetzen des Verhinderungssignals auch von extern erfolgen kann, beispielsweise von einer Leitstelle aus, die angerufen worden ist, als das Fahrzeug den vorgebbaren geographischen Bereich verließ. Das Anrufen der Leitstelle durch das Fahrzeug beim Verlassen des geographischen Bereichs (durch z. B. eine Sendeeinheit oder Sende-/Empfangseinheit, die eine insbesondere (Funk-)Signalübertragungsverbindung (uni- oder bidirektional) zur Leitstelle aufbaut) hat den Vorteil, daß nun von der Leitstelle aus Kontakt mit dem Halter des Fahrzeuges oder einer anderen autorisierten Person aufgenommen werden kann, um beispielsweise zu erfragen, ob das Fahrzeug den abgespeicherten geographischen Freiraum zulässigerweise verlassen hat. Sollte dies nämlich der Fall sein, so würde es keinen Sinn machen, das Verhinderungssignal weiterhin aufrechtzuerhalten. In diesem Fall kann dann über die Leitstelle das Verhinderungssignal rückgesetzt werden.

Auf die oben beschriebene Art und Weise kann bei Verlassen des geographischen Bereichs noch untersucht werden, ob dies berechtigterweise erfolgt ist. Der geographische Bereich ist nämlich vorzugsweise veränderbar. So kann beispielsweise vorgesehen sein, daß dem Halter/Fahrer vor Antritt einer Fahrt ein veränderter geographischer Bereich freigeschaltet wird (beispielsweise von der Leitstelle), um Ziele anfahren zu können, die außerhalb des zuvor abgespeicherten geographischen Bereichs liegen. Sollte der Halter/Fahrer vor Antritt der Fahrt es versehentlich versäumt haben, sich diese Erweiterung seines geographischen Freiraums freischalten zu lassen, so ist dies bei Überschreiten des abgespeicherten geographischen Bereichs zunächst ohne Nachteil, da die Leitstelle Kontakt mit dem Halter/Fahrer aufnehmen kann, um das gesetzte Verhinderungssignal rückzusetzen.

Im Hinblick auf verkehrssicherungstechnische Aspekte ist es von Vorteil, wenn die erfindungsgemäße Vorrichtung derart ausgelegt ist, daß sich das außerhalb des zulässigen geographischen Bereichs befindende Fahrzeug für eine gewisse Freischalt-Zeitspanne nach dem Abschalten der Antriebsvorrichtung trotz gesetztem Verhinderungssignal wieder gestartet werden kann. Sollte nämlich beispielsweise das sich außerhalb des zulässigen geographischen Bereichs befindende Fahrzeug infolge eines nicht beabsichtigten Ausschaltens der Antriebsvorrichtung innerhalb eines Gefahrenbereichs (Straßen- und/oder Schienenkreuzungsbereich) zum Stillstand gekommen sein, so sollte die Möglichkeit bestehen, das Fahrzeug wieder starten zu können, und zwar unabhängig davon, ob nun das Fahrzeug den zulässigen geographischen Bereich verlassen hat oder nicht.

In vorteilhafter Weiterbildung der Erfindung ist vorgesehen, daß die Vorrichtung eine Wegfahrsperre mit unter anderem einer Transponder-Erkennungsvorrichtung aufweist und daß die Wegfahrsperre bei dem Versuch aktiviert wird, die Antriebsvorrichtung bei gesetztem Verhinderungssignal unter Verwendung eines von der Transponder-Erkennungsvorrichtung als zulässig erkannten Transponder einzuschalten. Insbesondere ist vorgesehen, daß in dem zuvor beschriebenen Fall die Wegfahrsperre erst nach Ablauf der Freischalt-Zeitspanne, die mit dem Ausschalten der Antriebsvorrichtung des Fahrzeuges zu laufen beginnt, aktiviert wird. Die Wegfahrsperre braucht nicht notwendigerweise eine Transponder-Erkennungsvorrichtung aufzuweisen. In diesem Fall wird sie dann aktiviert, wenn der Versuch unternommen wird, die Antriebsvorrichtung bei gesetztem Verhinderungssignal einzuschalten.

Im Gegensatz zu der bekannten Anlage gemäß DE 42 24 536 A1 wird also mit der Erfindung der Bewegungsraum eines Fahrzeuges nicht eingeschränkt. Vielmehr ist es so, daß das Fahrzeug sich außerhalb seines zulässigen geographischen Bereichs bewegen kann, ohne daß es zu einem Eingriff in die Antriebsaggregate bzw. die diese steuernde Elektronik kommt. Das erfindungsgemäße Prinzip ist völlig konträr zu dem Ansatz gemäß DE 42 24 536 A1, bei dem das Fahrzeug beim Verlassen des zulässigen geographischen Bereichs in jedem Fall stillgesetzt wird und die verkehrssicherungstechnischen Aspekte lediglich dadurch in ungenügender Weise berücksichtigt werden, daß der Fahrer eine Warnung erhält, wenn er sich in der grenznahen Zone des zulässigen geographischen Bereichs befindet.

Nachfolgend wird die Erfindung anhand einer Funktionsbeschreibung eines bevorzugten Ausführungsbeispiels näher erläutert.

Das mit der erfindungsgemäßen Vorrichtung versehene Fahrzeug empfängt laufend über einen GPS-Empfänger Signale von GPS-Satelliten, um anhand dieser Signale die dem jeweils aktuellen Standort des Fahrzeuges entsprechenden Positionskoordinaten zu ermitteln. In einem Speicher ist ein zulässiger geographischer Bereich (nachfolgend Freifahrzone genannt) abgelegt. Die Positionskoordinaten werden in einer Auswerteeinheit ausgewertet, um feststellen zu können, ob der aktuelle Standort des Fahrzeuges innerhalb oder außerhalb der Freifahrzone liegt. Sobald festgestellt wird, daß sich das Fahrzeug außerhalb der Freifahrzone befindet, wird über die Auswerteeinheit eine Verhinderungssignal-Erzeugungsvorrichtung angesteuert, um ein Verhinderungssignal zu erzeugen (zu setzen).

Beim Verlassen der Freifahrzone wird ferner vom Fahrzeug eine Funkverbindung zu einer Leitstelle aufgebaut. Über diese Funkverbindung wird der Leitstelle vom Fahrzeug signalisiert, daß eine Alarmsituation vorliegt. Die Leitstelle identifiziert den Anrufer (Fahrzeug) und "befragt" das Fahrzeug nach dem Alarmgrund. Daraufhin informiert das Fahrzeug die Leitstelle über den Alarmgrund, daß nämlich das Fahrzeug die zuvor freigeschaltete Freifahrzone verlassen hat. Danach wird die Funkverbindung zwischen Fahrzeug und Leitstelle abgebrochen.

In der Leitstelle können nun unterschiedliche Aktivitäten entwickelt werden. Beispielsweise kann von der Leitstelle aus versucht werden, Kontakt mit einer autorisierten Person aufzunehmen, die berechtigterweise Zugang zum zuvor identifizierten Fahrzeug hat. Über die Leitstelle kann diese Person befragt werden, ob das Verlassen der Freifahrzone mit Zustimmung dieser Person erfolgt ist. Sollte dies der Fall sein, so kann über die Leitstelle das Verhinderungssignal im Fahrzeug rückgesetzt werden. Sollte hingegen die Leitstelle nicht die Bestätigung von der autorisierten Person erhalten, daß das Verlassen der Freifahrzone zulässigerweise erfolgt ist, so kann die Leitstelle das Fahrzeug orten und verfolgen.

Das Setzen des Verhinderungssignals im Augenblick des Verlassens der Freifahrzone erfolgt ohne daß auf den Fahrbetrieb des Fahrzeuges Einfluß genommen wird. Dies ist im Hinblick auf die Verkehrssicherheit ein ganz entscheidender Aspekt der erfindungsgemäßen Vorrichtung. Das Setzen des Verhinderungssignals stellt lediglich sicher, daß das Fahrzeug nach einem Abschalten des Motors und nach Verstreichen einer vorgegebenen Freischalt-Zeitspanne nicht erneut gestartet werden kann, sofern es sich zu diesem Zeitpunkt immer noch außerhalb der Freifahrzone befindet. Mit anderen Worten ist es also möglich, daß das Fahrzeug die Freifahrzone verläßt und sich über längere Zeit bei eingeschaltetem Motor außerhalb der Freifahrzone befindet, um dann wieder in die Freifahrzone hineinzufahren. Während der gesamten Dauer, für die sich das Fahrzeug außerhalb der Freifahrzone befunden hat, ist sein Bewegungsspielraum in keiner Weise eingeschränkt; vielmehr konnte das Fahrzeug sich außerhalb der Freifahrzone frei bewegen.

Das Vorsehen der oben erwähnten Freischalt-Zeitspanne hat ebenfalls einen verkehrssicherungstechnischen Aspekt. Derartige Freischalt-Zeitspannen sind bei den heute erhältlichen Wegfahrsperren für Fahrzeuge implementiert. Diese Freischalt-Zeitspannen, die zwischen 10 und 20 Sekunden betragen kann, soll gewährleisten, daß der gegebenenfalls nicht autorisierte Fahrer eines Fahrzeuges dieses dennoch fortbewegen kann, wenn es versehentlich in einem Gefahrenbereich (Straßen- oder Schienenkreuzungsbereich) zum Stillstand gekommen ist (beispielsweise infolge eines unfreiwilligen Ausschaltens des Motors).

## Patentansprüche

1. Vorrichtung zum zumindest vorübergehenden Setzen eines Verhinderungssignals zum Verhindern des Startens eines eine Antriebsvorrichtung aufweisenden Fahrzeuges beim Verlassen eines vorgebbaren zulässigen geographischen Bereichs, mit
- einem GPS-Empfänger zum Empfangen von GPS-Signalen zwecks Ermittlung des jeweils aktuellen Standorts des Fahrzeuges,
- einem Speicher zum Speichern des zulässigen geographischen Bereichs,
- einer Auswerteeinheit zum Untersuchen, ob der aktuelle Standort des Fahrzeuges innerhalb oder außerhalb des vorgebbaren geographischen Bereichs liegt, und
- einer mit der Auswerteeinheit verbundenen Verhinderungssignal-Erzeugungsvorrichtung zum Setzen eines Verhinderungssignals zum Verhindern des Startens des Fahrzeuges nach Abschalten der das Fahrzeug antreibenden Antriebsvorrichtung, sofern der Standort des Fahrzeuges zum Zeitpunkt des Einschaltens der Antriebsvorrichtung außerhalb des geographischen Bereichs liegt,
- wobei das Verhinderungssignal erzeugt wird, sobald das Fahrzeug den zulässigen geographischen Bereich verläßt.

2. Vorrichtung nach Anspruch 1, dadurch gekennzeichnet, daß eine Sendeeinheit bzw. Sende-/Empfangseinheit vorgesehen ist, über die eine Signalübertragungsverbindung zu einer Leitstelle aufbaubar ist, wenn die Verhinderungssignal-Erzeugungsvorrichtung das Verhinderungssignal erzeugt.

3. Vorrichtung nach Anspruch 1 oder 2, dadurch gekennzeichnet, daß das Verhinderungssignal von extern rücksetzbar ist, und zwar insbesondere von einer Leitstelle aus, die angerufen wird, wenn das Fahrzeug den zulässigen geographischen Bereich verläßt.

4. Vorrichtung nach einem der Ansprüche 1 bis 3, dadurch gekennzeichnet, daß das Verhinderungssignal durch die Auswerteeinheit rücksetzbar ist, wenn das Fahrzeug nach einem Verlassen des zulässigen geographischen Bereichs wieder in diesen gelangt.

5. Vorrichtung nach einem der Ansprüche 1 bis 3, dadurch gekennzeichnet, daß das Verhinderungssignal durch die Auswerteeinheit rücksetzbar ist, wenn das Fahrzeug nach einem Verlassen des zulässigen geographischen Bereichs wieder in diesen gelangt, ohne daß die Antriebsvorrichtung des Fahrzeuges zwischenzeitlich ausgeschaltet war.

6. Vorrichtung nach einem der Ansprüche 1 bis 3, dadurch gekennzeichnet, daß das gesetzte Verhinderungssignal das Einschalten der Antriebsvorrichtung erst nach Ablauf einer vorgebbaren Freischalt-Zeitspanne nach Abschalten der Antriebsvorrichtung des Fahrzeuges verhindert.

7. Vorrichtung nach einem der Ansprüche 1 bis 6, dadurch gekennzeichnet, daß eine Wegfahrsperre mit unter anderem einer Transponder-Erkennungsvorrichtung vorgesehen ist, und daß die Wegfahrsperre bei dem Versuch, die Antriebsvorrichtung bei gesetztem Verhinderungssignal unter Verwendung eines von der Transponder-Erkennungsvorrichtung als zulässig erkannten Transponder einzuschalten, aktiviert wird.

8. Vorrichtung nach einem der Ansprüche 1 bis 6, dadurch gekennzeichnet, daß eine Wegfahrsperre vorgesehen ist, die bei dem Versuch, die Antriebsvorrichtung bei gesetztem Verhinderungssignal einzuschalten, aktiviert wird.

9. Vorrichtung nach Anspruch 6 und 7 oder 6 und 8, dadurch gekennzeichnet, daß die Wegfahrsperre nur dann aktiviert wird, wenn die Freischalt-Zeitspanne abgelaufen ist.
